# EUROPEAN PATENT APPLICATION

(11) **EP 0 867 441 A2**
(43) Date of publication of application: **30.09.1998**
(21) Application number: 98302340.9
(22) Date of filing: 27.03.1998
(51) Int. Cl.: C07F 7/12, C07F 7/18, C07C 17/30

(54) **Surface treatment agent**

(30) Priority: 28.03.1997 JP 94880/97
(71) Applicant: Dow Corning Toray Silicone Company Ltd., Ichihara-shi, Chiba Prefecture (JP)
(72) Inventor: Kobayashi, Hideki, Dow Corning Toray, Ichihara-shi, Chiba Prefecture (JP); Masatomi, Toru, Dow Corning Toray, Ichihara-shi, Chiba Prefecture (JP)
(74) Representative: Lewin, John Harvey

(57) **Abstract**

The present invention relates to a surface treatment agent which has as its main component a fluorine-containing organosilicon compound represented by the general formula: 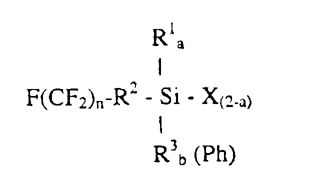 where R¹ is a monovalent hydrocarbon group, with the exception of alkenyl groups, R² is a divalent organic group, R³ is a divalent hydrocarbon group, X is a halogen atom or an alkoxy group with a carbon number of 1 to 10, and (Ph) is a phenyl group. The subscripts a and b are 0 or 1, and the subscript n is an integer of 4 to 12.

## Description

The present invention relates to a surface treatment agent, and, more specifically, to a surface treatment agent that is capable of forming coating films having superior water repellency and oil repellency and possessing a high index of refraction when coated onto the surface of various substrates.

Because fluorine-containing organosilicon compounds have insignificant surface tension and are superior in terms of water repellency, oil repellency, resistance to chemicals, and lubricity, they have been used as agents for the treatment of the surface of various substrates. For example, among known fluorine-containing organosilicon compounds of this type, there are 3,3,3-trifluoropropylmethyldichlorosilane, 3,3,4,4,4pentafluorobutylmethyldichlorosilane, 3,3,4,4,5,5,5heptafluoropentylmethyldichlorosilane, 3,3,3-trifluoropropyltrichlorosilane (see Japanese Kokai Patent Publication No. Sho 50[1975]-126621), (1-trifluoromethylethyl) methyldichlorosilane, (1-pentafluoroethylethyl) methyldichlorosilane (see Japanese Kokai Patent Publication No. Sho 57[1982]-140787). See also Japanese Kokai Patent Publication No. Sho 63[1988]-255288), teaching a perfluoroether-containing hydridosilane, and Japanese Kokai Patent Publication No. Hei 02[1990]-115190.

However, the above described fluorine-containing chlorosilanes are characterized by a low index of refraction, and for this reason their application to transparent substrates results in obstructions due to the difference in the indexes of light refraction. Also, the perfluoroether-containing hydridosilanes have a limited field of application because they have one silicon-bonded hydrogen atom per molecule.

The authors of the present invention arrived at the present invention as a result of in-depth investigations aimed at eliminating the above described problems.

Namely, the purpose of the present invention is to offer a surface treatment agent that is capable of forming coating films having superior water repellency and oil repellency, possessing a high index of refraction when coated on the surface of various substrates.

The present invention relates to a surface treatment agent which has as its main component a fluorine-containing organosilicon compound represented by the general formula: 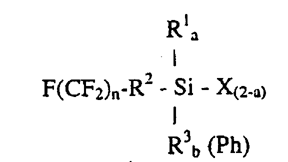 where R¹ is a monovalent hydrocarbon group, with the exception of alkenyl groups, R² is a divalent organic group, R³ is a divalent hydrocarbon group, X is a halogen atom or an alkoxy group with a carbon number of 1 to 10, and (Ph) is a phenyl group. The subscripts a and b are 0 or 1, and the subscript n is an integer of 4 to 12.

Because the main component of the surface treatment agent of the present invention is a specific fluorine-containing organosilicon compound having perfluoroalkyl groups and phenyl groups in one molecule, it has the advantage of forming coating films having superior water repellency and oil repellency, and possessing a high index of refraction on the surface of various substrates.

The main component of the surface treatment agent of the present invention is a fluorine-containing organosilicon compound represented by the general formula: 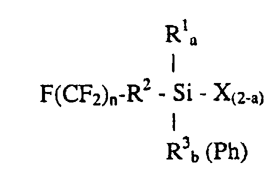 In the formula, R¹ is a monovalent hydrocarbon group, with the exception of alkenyl groups, specifically exemplified by methyl, ethyl, propyl, isopropyl, butyl, isobutyl, pentyl, and other alkyl groups; cyclopentyl, cyclohexyl, and other alicyclic hydrocarbon groups, with methyl being preferable. R² is a divalent organic group specifically exemplified by ethylene, propylene, butylene, pentylene, and other alkylene groups; methylenoxyethylene, methylenoxypropylene, ethylenoxypropylene, and other alkylenoxyalkylene groups; propylenephenylene, butylenephenylene, and other alkylenearylene groups; ethylenoxyphenylene, propylenoxyphenylene, and other alkylenoxyarylene groups, with ethylene being preferable. R³ is a divalent hydrocarbon group specifically exemplified by ethylene, propylene, isopropylene, butylene, hexylene, and other alkylene groups. X is a halogen atom or an alkoxy group with a carbon number of 1 tolO, with the halogen atoms exemplified by chlorine atoms and bromine atoms and the alkoxy groups exemplified by methoxy, ethoxy, propoxy, and butoxy groups. The subscripts a and b are 0 or 1. Here, when the subscript a is 0, the above mentioned organosilicon compound is a dialkoxysilane or dihalosilane comprising fluorine-containing organic groups, and when the subscript a is 1, the above mentioned organosilicon compound is a monoalkoxysilane or monohalosilane comprising fluorine-containing organic groups. Also, when the subscript b is 0, the above mentioned organosilicon compound becomes a phenylfluorosilane, in which phenyl groups are directly bonded to silicon atoms. The subscript n is an integer of 4 to 12. This is due to the fact that when the subscript n is less than 4, surface tension, water repellency, oil repellency, resistance to chemicals, and lubricity decrease. (Ph) is a phenyl group. On the other hand, when the subscript n exceeds 12, handling becomes difficult, and operational properties deteriorate. In addition, although there are no particular limitations concerning the structure of the fluorine-containing alkyl groups represented by the formula: F(CF₂)ₙ-, one may suggest branched groups, straight-chain groups, and straight-chain groups with partial branching, with straight-chain groups being preferable.

The fluorine-containing organosilicon compound of this type is specifically exemplified by the compounds represented by the formulae below:

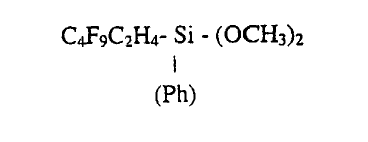

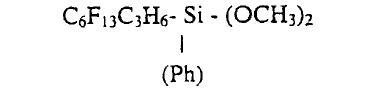

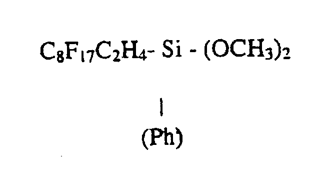

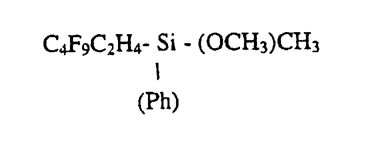

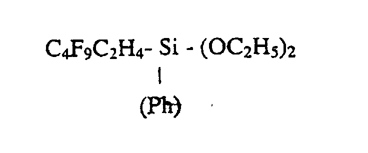

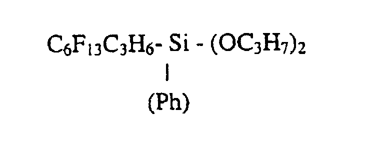

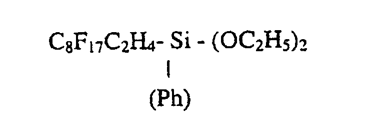

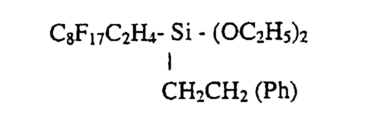

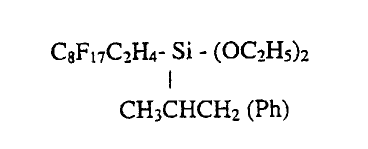

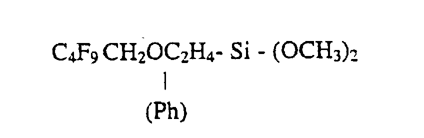

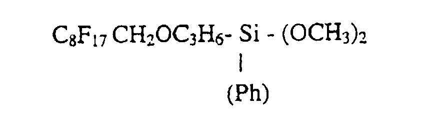

The fluorine-containing organosilicon compound used in the present invention can be synthesized, for example, by using the following preparative method.

The compositions of the present invention can be prepared using the method described below. An organosilicon compound (A) represented by the general formula: 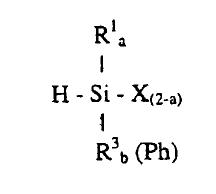 where R₁, R₃, X, and subscripts a and b are the same as in above, and (B) a fluorine-containing organic compound represented by the general formula:

F(CF₂)ₙ-R₄

where the subscript n is the same as above, and R⁴ is a monovalent organic group having aliphatic unsaturated hydrocarbon bonds are subjected to an addition reaction in the presence of (C) a hydrosilylation reaction catalyst, whereupon the product of the reaction is subjected to refining by distillation and separation.

In addition, in case X is a halogen atom, if an alcohol with a carbon number of 1 to 10 is reacted with the reaction product subsequent to the addition reaction, a fluorine-containing organosilicon compound can be prepared, in which X is an alkoxy group.

In the above described preparative method, the organosilicon compound of component (A) is the main starting material, and the fluorine-containing organic compound of component (B) is a starting material intended for the introduction of fluorine-containing organic groups into the fluorine-containing organosilicon compound used in the present invention. Specifically, the monovalent organic groups of R4 are exemplified by vinyl, allyl, butenyl, pentenyl, and other alkenyl groups; vinyloxymethylene, allyloxymethylene, allyloxyethylene, and other alkenyloxyalkylene groups; vinylphenyl, allylphenyl, butenylphenyl, and other alkenylaryl groups; vinyloxyphenyl, allyloxyphenyl, and other alkenyloxyaryl groups, with vinyl or allyl groups being preferable. Specifically, the fluorine-containing organic compound of component (B) is exemplified by the compounds represented by the formulae listed hereinbelow.

C₄F₉CH=CH₂

C₆F₁₃CH₂CH=CH₂

C₈F₁₇CH=CH₂

C₆F₁₃CH=CH₂

C₈F₁₇CH₂CH=CH₂

C₄F₉CH₂OCH=CH₂

C₆F₁₃CH₂OCH₂CH=CH₂

C₈F₁₇C₂H₄OCH=CH₂

C₄F₉CH₂OCH₂CH=CH₂

C₆F₁₃CH₂OCH=CH₂

C₈F₁₇CH₂OCH=CH₂

In addition, although there are no particular limitations concerning the amounts, in which component (A) and component (B) are compounded, from the standpoint of yields, it is preferable that the amount of component (B) should be in the range of from 0.1 moL to 5.0 moL per 1 moL of component (A).

The hydrosilylation catalyst of component (C) used in the above described preparative method is a catalyst intended for the acceleration of the addition reaction of the silicon-bonded hydrogen atoms in component (A) and aliphatic unsaturated hydrocarbon bonds in component (B), and is specifically exemplified by palladium, rhodium, platinum, and other transitional metal catalysts. In particular, platinum-carrying activated carbon, platinum-carrying silica, chloroplatinic acid, alcohol solutions of chloroplatinic acid, complexes of chloroplatinic acid and olefins, complexes of chloroplatinic acid and vinylsiloxane or platinum black and other platinum family catalysts, are appropriate because they considerably accelerate the addition reaction. Although there are no particular limitations concerning the amount, in which component (C) is compounded, when platinum family catalysts are used, it is preferable for its amount to be such that the amount of platinum metal is in the range of from 0.1 to 1,000 parts by weight, and even more preferable, 0.5 to 500 parts by weight, per 1,000,000 parts by weight of the total amount of component (A) and component (B).

In addition, the above mentioned addition reaction can be carried out either without a solvent or in the presence of a solvent. The organic solvents that can be used here are exemplified by ethyl ether, tetrahydrofuran, dibutyl ether, diisopropyl ether and other ethers; hexane, heptane, and other alkanes; benzene, toluene, and other aromatic hydrocarbons. There are no particular limitations concerning the reaction temperature for the above mentioned addition reaction. Usually, however, it is in the range of from 0°C to 200°C. When organic solvents are used, the temperature can as high as the boiling point of these organic solvents, and, preferably, should be maintained in the range between room temperature and 100°C.

The surface treatment agent of the present invention is an agent, in which the above described fluorine-containing organosilicon compound is its main component, while organic solvents are used as diluents therefor. The organic solvents that are used are specifically exemplified by diethyl ether, tetrahydrofuran, and other ethers; hexane, heptane, octane, and other hydrocarbon solvents; benzene, toluene, and other aromatic hydrocarbon solvents. The amounts, in which they are compounded, are determined according to the circumstances depending on the operational characteristics. Usually, however, the concentration of the above mentioned fluorine-containing organosilicon compound is 0.01 to 99 wt%, and preferably, 0.1 to 50 wt%.

Silane coupling agents that do not contain fluorine atoms can be added to improve the adhesion of the surface treatment agent of the present invention to various substrates, and curing agents can be added thereto in order to improve its curability. The compounds represented by the formulae below are suggested as examples of the silane coupling agents to be used.

H₂NCH₂CH₂Si(OC₂H₅)₃

NH₂CH₂CH₂NH(CH₂)₃Si(OCH₃)₃

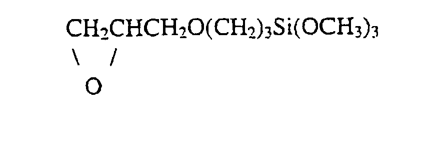

CH₂=CHSi(OCH₃)₃

CH₂=CHSi(OC₂H₅)₃

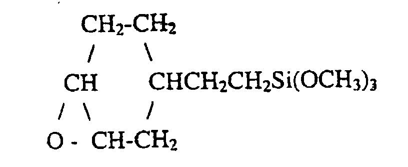

CH₂=CHSi(OOCCH₃)₃

HS(CH₂)₃Si(OCH₃)₃

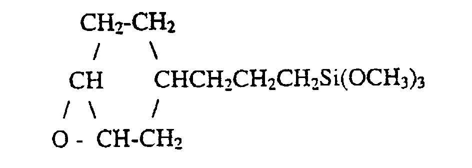

The silane coupling agents can be used either singly or in combination. Also, the amount, in which they are added is preferably in the range of 0.01 wt% to 10 wt% relative to the treatment agent of the present invention. Agents that are used in the dehydrocondensation reaction are effective as curing agents, and, specifically, one may suggest dibutyltin acetate, dibutyltin laurate, dibutyltin dioctoate, stannous octoate stannous naphthenate, stannous oleate, stannous isobutyrate, stannous linolate, stannous stannous palmitoleate, stannous cinnamate, stannous phenyl acetate, and other tin salts of carboxylic acids, as well as iron salts, manganese salts, or cobalt salts of these carboxylic acids, tetralkyl titanate, dialkyl titanate complex salts, and organosiloxy titanate. In addition to these, colorants, pigments, dyes, light-absorbing agents, fluorescent coating materials, sensitized materials, coloring agents, silica micropowder and other fillers can be added to the surface treatment agent of the present invention.

Coating techniques which may be used include brushing, bar coating, spin coating, and the like, techniques, in which the treatment agent of the present invention is sprayed on, and techniques, in which substrates are dipped in the treatment agent of the present invention are suggested as examples of the techniques to be used for treating surfaces of substrates with the surface treatment agent of the present invention. To form a coating film, upon uniformly applying the treatment agent of the present invention to the surface of a substrate, it is preferable to heat it for 20 seconds to 3 hours at a heating temperature of 50 to 150°C.

Substrates include plates made of soda glass, heat-reflecting glass, automotive glass, glass used for ships, glass used for airplanes, and the like; plates made of copper, iron, stainless steel, aluminum, zinc, and other metals; top quality paper, low-grade paper, and other types of paper; polyester resins, polycarbonate resins, polystyrene, acrylic resins, methacrylic resins, nylon resins, and other synthetic resins or films therefrom; fibers, such as natural fibers and synthetic fibers; ceramics, and plastics are suggested as the substrates, on which the surface treatment agent of the present invention can be used. It is preferable to cleanse the surface of the substrates with organic solvents and detergents.

The surface treatment agent of the present invention as described above forms coating films of superior water repellency, oil repellency and heat resistance on the surface of various substrates. Because the fluorine-containing organosilicon compound used in the treatment agent of the present invention has at least one silicon-bonded halogen atom or alkoxy group per molecule, it is highly reactive and has the advantage of permitting rapid water and oil repellency treatment of substrate surfaces. Furthermore, the fluorine-containing organosilicon compound is characterized by a high index of refraction, with that of 1.35 or higher being particularly preferable. For this reason, it has the advantage that when the surface treatment agent of the present invention is applied to various transparent plastic substrates, various obstructions originating from the difference in the indexes of light refraction, for example, a decrease in light transmissivity, are less liable to occur. Also, when the condensation reaction is carried out by using condensation reaction catalysts and the like, problems are created by the insolubility in organic solvents of the condensation reaction products of conventional fluorine-containing organosilicon compounds, which do not contain phenyl groups, whereas the fluorine-containing organosilicon compound used in the treatment agent of the present invention has the advantage that, because it contains phenyl groups, even though this compound itself undergoes condensation reaction, it can still be dissolved in organic solvents. For this reason, in the case of the surface treatment agent of the present invention, various organic solvents can be used as diluents.

### EXAMPLES

Hereinbelow, the present invention is explained in detail by referring to application examples. In the application examples, the water repellency of coating films was evaluated by measuring the water contact angle thereof, and their oil repellency was evaluated by measuring their methylene iodide contact angle. In addition, the contact angles were measured by using the following procedure. Drops of water and methylene iodide were applied in five locations on a coating film maintained at a temperature of 20°C. The corresponding contact angles were measured by using a contact angle measuring apparatus from Kyowa Kaimen Kagaku Kabushiki Kaisha, and the corresponding average values were used as the values of contact angles for particular coating films. Also, the indexes of refraction were measured by using an Abbe's refractometer at a temperature of 25°C.

### Application Example 1

446 g of perfluoroctylethylene represented by the formula: C₈F₁₇CH=CH₂ and 0.3 g of 40 wt% isopropanol solution of chloroplatinic acid were placed in a reactor and heated to 85°C under agitation. Subsequently, 177 g of phenyldichlorosilane was added in a dropwise manner to this system. Upon termination of the dropwise addition of said silane, heating was carried out for 2 hours under agitation while maintaining the reaction solution at a temperature of 95°C. After that, 560 g of perfluoroctylethylphenyldichlorosilane represented by the formula: 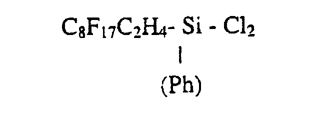 was obtained by removing unreacted matter by distillation. Furthermore, 500 g of perfluoroctylethylphenyldimethoxysilane represented by the formula: 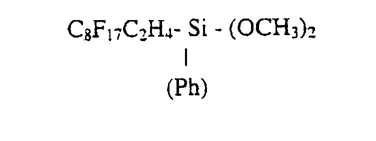 was obtained by adding 100 g of methanol thereto and conducting recirculation under heating and then refining by distillation. The perfluoroctylethylphenyldimethoxysilane was liquid at room temperature. Its boiling point was 120°C/10 mmHg, and it had a specific weight of 1.48 and an index of refraction of 1.40.

A surface treatment agent was prepared by diluting 1 part by weight of the resultant perfluoroctylethylphenyldimethoxysilane with 100 parts by weight of n-heptane. Subsequently, slide glass was dipped in the surface treatment agent for 1 minute and then subjected to heat treatment at 100°C/10 minutes. The water repellency and oil repellency of the thus-treated slide glass were measured, and the results are listed in Table 1.

### Application Example 2

246 g of perfluorobutylethylene represented by the formula: C₄F₉CH=CH₂ and 0.3 g of 40 wt% isopropanol solution of chloroplatinic acid were placed in a reactor and heated to 55°C under agitation. Subsequently, 177 g of phenyldichlorosilane was added in a dropwise manner to this system. Upon termination of the dropwise addition of said silane, heating was carried out for 2 hours under agitation while maintaining the reaction solution at a temperature of 95°C. After that, 385 g of perfluorobutylethylphenyldichlorosilane represented by the formula: 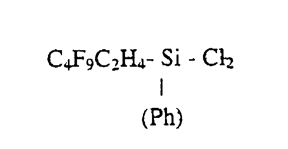 was obtained by removing unreacted matter by distillation. Furthermore, 352 g of perfluorobutylethylphenyldimethoxysilane represented by the formula: 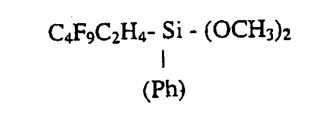 was obtained by adding 3 moL of methanol thereto and conducting recirculation under heating and then refining by distillation. The perfluorobutylethylphenyldimethoxysilane was liquid at room temperature and had an index of refraction of 1.40.

A surface treatment agent was prepared by diluting 1 part by weight of the resultant perfluorobutylethylphenyldimethoxysilane with 100 parts by weight of n-heptane. Subsequently, slide glass was subjected to treatment using this surface treatment agent and its water repellency and oil repellency were measured in the same manner as in Application Example 1. The results are listed in Table 1.

### Application Example 3

246 g of perfluorobutylethylene represented by the formula: C₄F₉CH=CH₂ and 0.3 g of 40 wt% isopropanol solution of chloroplatinic acid were placed in a reactor and heated to 55°C under agitation. Subsequently, 196 g of phenetyldimethoxysilane was added in a dropwise manner to this system. Upon termination of the dropwise addition of said silane, agitation was carried out for 2 hours while maintaining the reaction solution at a temperature of 90°C. After that, 320 g of perfluorobutylethylphenetyldimethoxysilane represented by the formula: 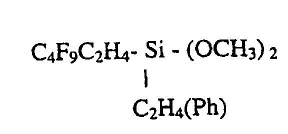 was obtained by removing unreacted matter by distillation. The perfluorobutylethylphenetyldimethoxysilane was liquid at room temperature and had an index of refraction of 1.40.

A surface treatment agent was prepared by diluting 1 part by weight of the resultant perfluorobutylethylphenetyldimethoxysilane with 100 parts by weight of n-heptane. Subsequently, slide glass was subjected to treatment using this surface treatment agent and its water repellency and oil repellency were measured in the same manner as in Application Example 1. The results are listed in Table 1.

### Comparison Example 1

A surface treatment agent was prepared by diluting 1 part by weight of perfluoroctylethyltrimethoxysilane (index of refraction: 1.33) represented by the formula C₈F₁₇C₂H₄Si(OCH₃)₃ with 100 parts by weight of n-heptane. Slide glass was subjected to treatment using this surface treatment agent and its water repellency and oil repellency were measured in the same manner as in Application Example 1. The results are listed in Table 1.

### Comparison Example 2

A surface treatment agent was prepared by diluting I part by weight of phenyltrimethoxysilane (index of refraction: 1.46) represented by the formula:

(Ph) Si - (OCH₃)₃

with 100 parts by weight of n-heptane. Slide glass was subjected to treatment using this surface treatment agent and its water repellency and oil repellency were measured in the same manner as in Application Example 1. The results are listed in Table 1.

**Table 1**

| | Water Repellency | Oil Repellency | Index of Refraction |
|---|---|---|---|
| Application Exp. 1 | 105 °C | 68° | 1.40 |
| Application Exp. 2 | 103 °C | 64° | 1.40 |
| Application Exp. 3 | 103 °C | 65° | 1.40 |
| Comparison Exp. 1 | 110°C | 75° | 1.33 |
| Comparison Exp. 2 | 90 °C | 29° | 1.46 |

## Claims

1. A surface treatment agent comprising a fluorine-containing organosilicone having the general formula: 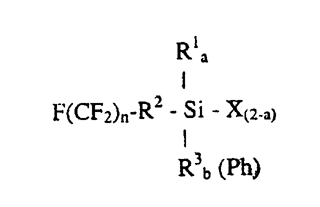 where R¹ is a monovalent hydrocarbon group, with the exception of alkenyl groups, R² is a divalent organic group, R³ is a divalent hydrocarbon group, X is a halogen atom or an alkoxy group with a carbon number of 1 to 10, and (Ph) is a phenyl group, and the subscripts a and b are 0 or 1, and the subscript n is an integer of 4 to 12.

2. The surface treatment agent according to claim 1, in which the index of refraction of the fluorine-containing silicone is not less than 1.35.

3. The surface treatment agent according to claim 1, which is obtained by compounding a hydrocarbon solvent as a diluent.

4. The surface treatment agent according to claim 1, wherein the value of b is 0.

5. The surface treatment agent according to claim 1, further comprising a silane.

6. The surface treatment agent according to claim 1, wherein the silane is present in an amount from 0.01 wt% to 10 wt% of the total composition.

7. An article of manufacture comprising a substrate coated with the composition of claim 1.

8. The article of manufacture of claim 7 wherein the substrate is a glass.

9. The article of manufacture of claim 7 wherein the substrate is a fiber.

10. A composition comprising:
(A) an organosilicon compound represented by the general formula: 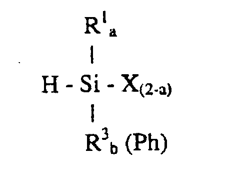
(B) a fluorine-containing organic compound represented by the general formula:
F(CF₂)ₙ-R⁴
where R¹ is a monovalent hydrocarbon group, with the exception of alkenyl groups, R² is a divalent organic group, R³ is a divalent hydrocarbon group, R⁴ is a monovalent organic group having aliphatic unsaturated hydrocarbon bonds, X is a halogen atom or an alkoxy group with a carbon number of 1 to 10, and (Ph) is a phenyl group, the subscripts a and b are 0 or 1, and the subscript n is an integer of 4 to 12; and
(C) a hydrosilylation reaction catalyst.

11. The composition of claim 10, wherein the hydrosilylation reaction catalyst is present in an amount from 0.1 to 1,000 parts by weight of (A) and (B).

12. The composition of claim 10, further comprising a silane.

13. The composition of claim 10, wherein the silane is present in an amount from 0.01 wt% to 10 wt% of the total composition.

14. The composition of claim 10, further comprising a hydrocarbon solvent as a diluent.

15. The composition of claim 10, wherein the hydrosilylation reaction catalyst is a platinum catalyst.

16. The composition of claim 10, wherein the amount of component (B) is in the range of from 0.1 moL to 5.0 moL per 1 moL of component (A).

17. A method comprising the steps of reacting (A) and (B) in the presence of a hydrosilylation reaction catalyst (C), wherein (A) is an organosilicon compound represented by the general formula: 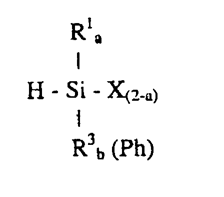 and (B) is a fluorine-containing organic compound represented by the general formula:
F(CF₂)ₙ-R⁴
where R¹ is a monovalent hydrocarbon group, with the exception of alkenyl groups, R² is a divalent organic group, R³ is a divalent hydrocarbon group, R⁴ is a monovalent organic group having aliphatic unsaturated hydrocarbon bonds, X is a halogen atom or an alkoxy group with a carbon number of 1 to 10, and (Ph) is a phenyl group, the subscripts a and b are 0 or 1, and the subscript n is an integer of 4 to 12;

18. The method of claim 16, wherein the reaction takes place in the presence of a solvent.

19. The method of claim 16, comprising the further step of coating the reaction product of (A) and (B) onto a substrate.
